# EUROPÄISCHE PATENTSCHRIFT

(11) **EP 2 604 153 B1**
(45) Veröffentlichungstag und Bekanntmachung des Hinweises auf die Patenterteilung: **14.05.2014**
(21) Anmeldenummer: 12196337.5
(22) Anmeldetag: 10.12.2012
(51) Int. Cl.: A47J 31/50, A47J 31/44, F25D 3/02

(54) **Vorratsbehälter zum Aufbewahren eines flüssigen Nahrungsmittels, etwa von Milch**
Storage container for storing a food liquid, such as milk
Réservoir de stockage pour le rangement d'un produit alimentaire liquide, par exemple de lait

(30) Priorität: 16.12.2011 DE 202011052332 U
(43) Veröffentlichungstag der Anmeldung: 19.06.2013
(73) Patentinhaber: WIK Far East Ltd, North Point Hong Kong (CN)
(72) Erfinder: Speh, Christoph, 45475 Mülheim an der Ruhr (DE)
(74) Vertreter: Haverkamp, Jens

(56) Entgegenhaltungen:
- DE-U1-202008 016 202
- US-A1- 2008 230 508

## Beschreibung

Die Erfindung betrifft einen Vorratsbehälter mit passivem Kühlelement zum Aufbewahren eines flüssigen Nahrungsmittels, etwa von Milch im Zusammenhang mit der Zufuhr derselben an eine Zubereitungsmaschine, etwa eine Kaffeemaschine wobei der Behälter als herausnehmbarer Einsatz für ein thermisch isoliertes Aufbewahrungsbehältnis ausgeführt ist und der Behälter zumindest ein Verbindungsglied zum Anbringen des passiven Kühlelements trägt.

Kaffeemaschinen, insbesondere wenn diese als sogenannte Vollautomaten ausgeführt sind, verfügen als Getränkezubereitungsmaschinen mitunter über einen Milchbehälter. Ein solcher Milchbehälter, welcher typischerweise ein Zubehörteil für eine solche Kaffeemaschine darstellt, dient zum Bevorraten von Milch, aus dem für die Bereitung von Kaffee-Milch-Mischgetränken, wie beispielsweise Cappuccino oder dergleichen, Milch entnommen wird. Typischerweise handelt es sich bei einem solchen Milchbehälter um einen neben der eigentlichen Kaffeemaschine anzuordnenden Behälter, aus dem eine Milchentnahmeleitung herausgeführt und an eine Saugpumpe der Kaffeemaschine angeschlossen ist. Derartige Milchbehälter verfügen über ein thermisch isoliertes Gehäuse sowie weisen gemäß einer Ausgestaltung eine aktive Kühlung, beispielsweise ausgeführt als Kühlung mittels eines Peltier-Elementes oder im Wege einer ansonsten hinlänglich bekannten Kompressionskühlung auf. In einem solchen Milchbehälter verbleibt die Milch in ihrem Gebinde. Die Milchentnahmeleitung wird in das Gebinde hinein gelegt und durch eine Leitungsdurchbrechung aus dem Gehäuse herausgeführt. Zum Betrieb eines solchen, als Kühlschrank konzipierten Milchbehälters ist eine elektrische Stromversorgung erforderlich. Vorteilhaft bei einem solchen Milchbehälter ist, dass in diesem ein darin eingestelltes Milchgebinde zum Erreichen der gewünschten Kühltemperatur herabgekühlt werden kann.

In zunehmendem Maße werden Kaffeevollautomaten auch im häuslichen Bereich eingesetzt. Die Anschaffung eines zusätzlichen aktiven Milchkühlschrankes, wie vorbeschrieben, wird oftmals als unnötige Anschaffung angesehen, mitunter auch aus Platz- und Stromverbrauchsgründen. Andererseits wird von Verbrauchern jedoch eine Bereitung von Kaffee-Milch-Mischgetränken gewünscht. In einem solchen Fall bedient man sich entweder eines Milchbehälters, in den die Milch eingefüllt wird oder stellt das Milchgebinde neben die Kaffeemaschine. Bei einer solchen Anwendung wird benutzerseitig jedoch öfters die Erfahrung gemacht, dass die neben der Kaffeemaschine positionierte Milch unerkannt sauer geworden ist und dementsprechend das mit dieser bereitete Kaffee-Milch-Mischgetränk nicht dem gewünschten entspricht. Abhilfe bringt in Bezug auf diese Problematik der aus DE-U-20 2008 016 202 bekannt gewordene passive Milchaufbewahrungsbehälter. Bei diesem ist eine passive Kühlung mittels zumindest eines, zuvor in einem Eis- oder Gefrierfach gekühlten Kühlelementes vorgesehen. Die Milch selbst befindet sich bei diesem vorbekannten Milchaufbewahrungsbehälter in ihrem Verkaufsgebinde, welches als solches in den thermisch isolierten Milchaufbewahrungsbehälter eingestellt wird.

Eingesetzt kann ein solcher Milchbehälter, wie aus DE-U-20 2008 016 202 bekannt, dann allerdings nicht, wenn ein Verkaufsgebinde nicht in den Kühlraum des thermisch isolierten Milchaufbewahrungsbehälters eingesetzt werden kann. Dieses ist beispielsweise bei solchen Gebinden der Fall, die auf Grund ihrer Geometrie nicht in den Kühlraum einpassen oder deren Gebinde schlichtweg zu groß sind.

Aus US 2008/0230508 A1 ist ein Behältnis, beispielsweise als Flasche ausgebildet, mit einer lösbar daran anschließbaren Temperaturregelungseinrichtung bekannt. Diese ist in einer Ausnehmung des Trinkbehältnisses untergebracht. Die lösbare Anordnung bei dieser Einrichtung zielt darauf ab, dass diese für mehrere Trinkbehältnisse, die nacheinander verwendet werden, genutzt werden kann. Die Temperaturregulierungseinrichtung dient zum Kühlen des sich in dem Behältnis auf Raumtemperatur befindlichen Flüssigkeit. Zu der in Bezug auf DE-U-20 2008 016 202 skizzierten Problematik offenbart US 2008/0230508 A1 keinerlei Lösungshinweise.

Ausgehend von diesem diskutierten Stand der Technik liegt der Erfindung daher die Aufgabe zugrunde, einen Vorratsbehälter vorzuschlagen, der sich insbesondere als Einsatz in einem thermisch isolierten, passiv gekühl ten Milchaufbewahrungsbehälter eignet der einfach in seiner Handhabung ist.

Gelöst wird diese Aufgabe erfindungsgemäß durch einen eingangs genannten, gattungsgemäßen Vorratsbehälter, bei dem der Behälter über zwei Verbindungsglieder zum Anbringen des passiven Kühlelementes verfügt, von denen ein ein oberes Verbindungselement ist, an dem das Kühlelement mit einem Aufhänger aufhängbar ist, und von denen das andere ein unteres Verbindungsglied ist, auf das das Kühlelement, wenn mit seinem Aufhänger an dem oberen Verbindungsglied aufgehängt, mit seiner Unterseite aufsteht und/oder von diesem formschlüssig gehalten wird.

Bei diesem Konzept ist vorgesehen, dass an zumindest eine der Außenwände des Behälters wenigstens ein Verbindungsglied angeschlossen ist. Da es sich bei dem Behälter typischerweise um ein Kunststoffteil handelt, ist es bei einer solchen Ausgestaltung möglich, dass das zumindest eine Verbindungsglied an den Behälter angeformt ist. Ein solches Verbindungsglied dient zum Anschließen eines passiven Kühlelementes, also eines Kühlelementes, welches ein Kühlmittel beinhaltet, das im Eisfach eines Kühlschrankes oder in einem Froster gekühlt wird, beinhaltet. Durch Anschließen eines solchen Kühlelementes an den Vorratsbehälter ist nicht nur gewährleistet, dass sich das Kühlelement in unmittelbarer Nähe zu einer Wand des Behälters befindet, sondern auch dass dieses zusammen mit dem Behälter gehandhabt werden kann. Befindet sich der Behälter mit dem daran angeschlossenen Kühlelement innerhalb eines thermisch isolierten passiven Milchaufbewahrungsbehälters und wird mit dem Henkel der Behälter entnommen, um beispielsweise den Behälter wegen Nichtgebrauchs der Getränkezubereitungsmaschine in den Kühlschrank zu stellen, wird zugleich das Kühlelement entnommen. Am Kühlschrank kann das Kühlelement von dem Behälter abgenommen und ins Eisfach oder in einen Froster gelegt werden. Dies bedeutet, dass bei Nichtgebrauch des Behälters und des Kühlelementes beide Teile in die jeweils vorgesehene Kühlung eingestellt bzw. eingelegt werden können. Gleiches gilt auch umgekehrt, wenn der Behälter mit dem flüssigen Nahrungsmittel, beispielsweise der Milch aus dem Kühlschrank entnommen und in einen thermisch isolierten Milchaufbewahrungsbehälter, angeordnet etwa neben einer Kaffeemaschine, eingebracht werden soll.

Dabei ist vorgesehen, dass an einer solchen Au-ßenseite des Behälters, die zum Anschließen eines Kühlelementes dient, zwei Verbindungsglieder vorgesehen sind, wobei beide Verbindungsglieder mit vertikalem Abstand zueinander angeordnet sind. Das diesbezüglich obere Verbindungselement ist ausgebildet, damit daran das Kühlelement aufgehängt werden kann, welches zu diesen Zweck über ein Aufhänger verfügt. Das untere Verbindungsglied dient dem Zweck, dass das Kühlelement mit seiner Unterseite darauf aufgestellt werden kann. Bei einer solchen Ausgestaltung, insbesondere wenn das Kühlelement zwischen den beiden Verbindungsgliedern verklemmt gehalten ist, ist dieses spielfrei an den Behälter angeschlossen. Dieses hat nicht nur zum Vorteil, dass das Kühlelement bei einem Transport des Behälters nicht wackelt, sondern dass sich dieser immer in seiner bestimmungsgemäßen Stellung zu der benachbarten Behälterwand befindet.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: Eine perspektivische Ansicht eines thermisch isolierten Milchaufbewahrungsbehälters, vorgesehen zum Plazieren neben einer Getränkezubereitungsmaschine, insbesondere einer Kaffeemaschine,
- **Fig. 2:**: eine perspektivische Einsicht in den Milchaufbewahrungsbehälter der Figur 1 mit geöffnetem Deckel,
- **Fig. 3:**: eine perspektivische Ansicht eines in dem Milchaufbewahrungsbehälter angeordneten Vorratsbehälters nach Entnahme desselben aus dem Milchaufbewahrungsbehälters mit seinem Henkel in einer ersten Stellung,
- **Fig. 4:**: eine perspektivische Ansicht eines in dem Milchaufbewahrungsbehälter angeordneten Vorratsbehälters nach Entnahme desselben aus dem Milchaufbewahrungsbehälters mit seinem Henkel in einer weiteren Stellung,
- **Fig. 5:**: eine Teilquerschnittsdarstellung des Vorratsbehälters der Figur 3 durch die Ausgabeöffnung des Behälters,
- **Fig. 6:**: eine Darstellung entsprechend derjenigen der Figur 5 mit dem Henkel in seiner in Figur 4 gezeigten Stellung,
- **Fig. 7:**: eine perspektivische Rückansicht des Vorratsbehälters der vorangegangenen Figuren und
- **Fig. 8:**: der Vorratsbehälter der Figur 7 mit einem daran angeschlossenen passiven Kühlelement.

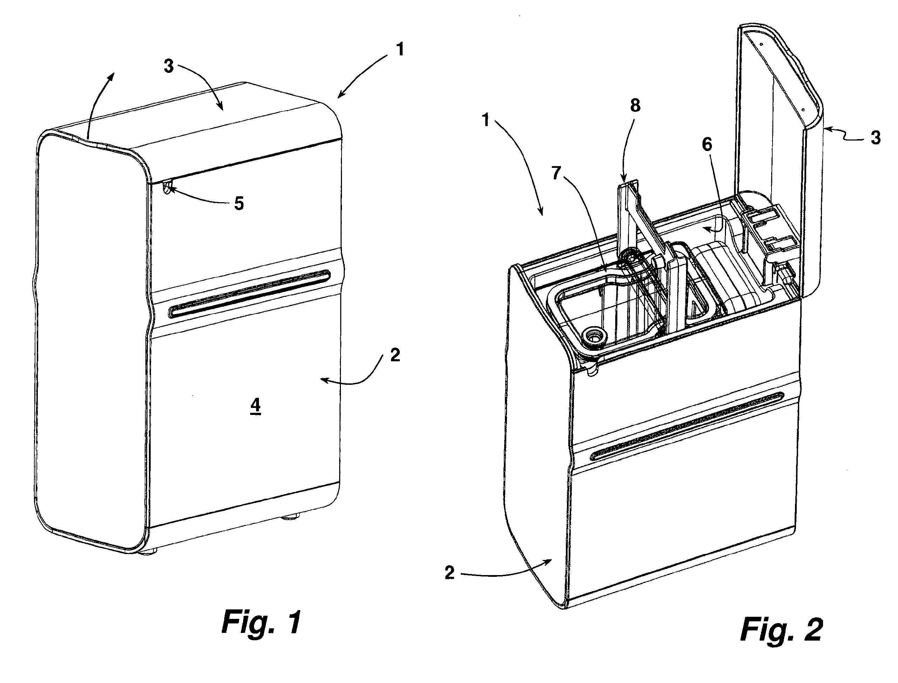

Ein Milchaufbewahrungsbehälter 1 ist in nicht näher dargestellten Art und Weise einer als Vollautomat konzipierten Kaffeemaschine zugeordnet. Der Milchaufbewahrungsbehälter 1 verfügt über ein Kunststoffgehäuse 2. Dem Gehäuse 2 zugehörig ist ein oberseitiger Deckel 3, der schwenkbar an dem übrigen Gehäuse 2 angelenkt ist. Die Schwenkbewegung zum Öffnen des Deckels ist 3 durch einen Pfeil in Figuren 1 und 2 kenntlich gemacht. In den oberen Abschluss einer Seitenwand 4 des Gehäuses 2 ist eine U-formige Leitungsdurchbrechung 5 eingebracht. Die Leitungsdurchbrechung 5 ist oberseitig durch den unteren Rand des Deckels 3 begrenzt. Die Leitungsdurchbrechung 5 dient zum Anordnen einer Milchentnahmeleitung, die mit ihrem einen Ende in ein in den Milchaufbewahrungsbehälter 1 eingestelltes Milchgebinde reicht und mit ihrem anderen Ende an eine Saugpumpe der Getränkezubereitungsmaschine angeschlossen ist. Über die Milchentnahmeleitung kann Milch für die Bereitung eines Milch- oder Kaffee-Milch-Mischgetränks entnommen werden.

Figur 2 zeigt den Milchaufbewahrungsbehälter 1 mit geöffnetem Deckel 2. Diese Einsicht in das Innere des Milchaufbewahrungsbehälters 1 zeigt, dass das Gehäuse 2 innenseitig eine umlaufende thermische Isolierung 6 aufweist. Auch der Boden und das Deckelinnere sind thermisch entsprechend isoliert. Innerhalb des Milchaufbewahrungsbehälters 1 befindet sich ein Vorratsbehälter 7, in dem die für eine Getränkezubereitung benötigte Milch bevorratet ist. An den Vorratsbehälter 7 ist schwenkbar ein Henkel 8 angeschlossen, der in seiner in Figur 2 gezeigten Stellung für eine Entnahme des Vorratsbehälters 7 aufgestellt ist. Der Vorratsbehälter 7 kann in vertikaler Richtung aus dem durch die thermische Isolierung 6 eingefassten Innenraum in vertikaler Richtung herausgezogen und umgekehrt in diesen eingestellt werden.

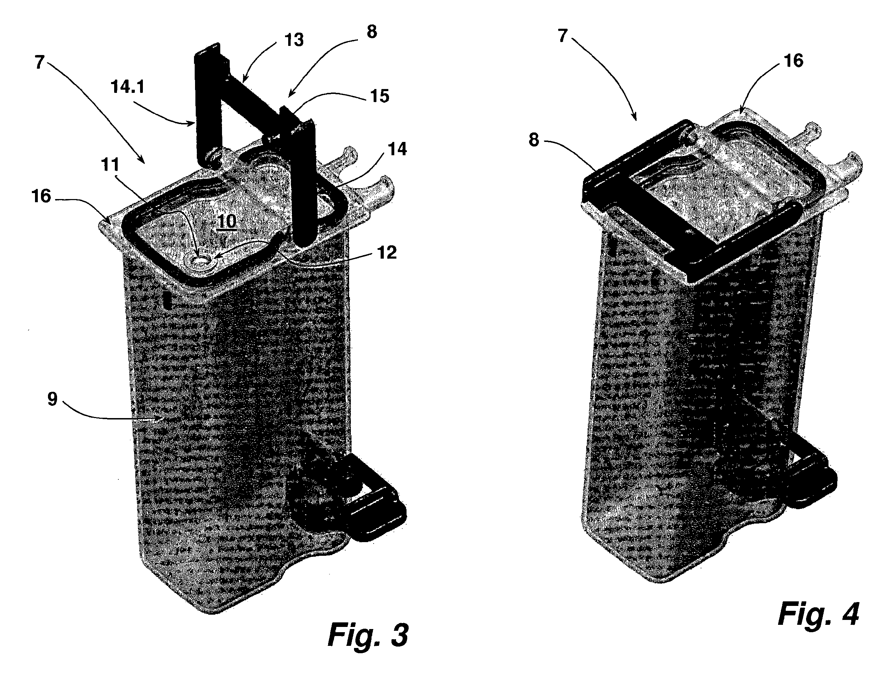

Der Vorratsbehälter 7 ist für sich alleine in Figur 3 abgebildet. Der Behälter 7 des dargestellten Ausführungsbeispiels verfügt über ein Behältnis 9, welches mit einem Deckel 10 verschlossen ist. Der Deckel 10 ist abgedichtet in die obere Öffnung des Behältnisses 9 eingreifend an dieses angeschlossen. Der Deckel 10 kann zum Befüllen und/oder Reinigen des Innenraums des Behältnisses 9 abgenommen werden. Der aus dem Behältnis 9 und dem Deckel 10 gebildete Behälter 7 ist somit geschlossen ausgeführt. Innerhalb des Deckels 10 befindet sich eine Ausgabeöffnung 11, die durch eine Fassung 12 aus elastischem Material, beispielsweise Silikon eingefasst ist. Die Ausgabeöffnung 11 dient zum Einführen eines Saugschlauches, um aus dem Behälter 7 Milch entnehmen zu können.

In einer alternativen Ausgestaltung ist vorgesehen, dass an die Fassung 12 der Ausgabeöffnung selbst ein Schlauch- oder Rohrstück angeformt ist, welches bis in den Bereich des Bodens des Behältnisses 9 reicht. Zur Entnahme von Milch braucht dann eine Saugleitung nicht notwendigerweise in das Behältnisinnere hineingeführt zu werden, sondern wird an die Fassung 12 angeschlossen.

Der Henkel 8 ist an Fortsätze zweier gegenüberliegender Seitenwände des Behältnisses 9 schwenkbar angeschlossen. Zu diesem Zweck greift jeweils ein Lagerzapfen des Henkels in eine Lageröffnung eines solchen Fortsatzes des Behältnisses 9 ein. Der Henkel 8 ist bügelförmig ausgebildet und umfasst ein Griffstück 13, welches zwei Schenkel 14, 14.1 miteinander verbindet, an die wiederum die Lagerzapfen angeformt sind. Angeformt an das Griffstück 13 des Henkels 8 ist ein als Verschlussstopfen 15 ausgeführter Verschlusskörper. Der Verschlussstopfen 15 verjüngt sich zu seinem freien Ende hin und ist an einer solchen Position des Griffstückes 13 bzw. des Henkels 8 angeordnet, dass beim Verschwenken des Henkels 8 aus seiner in Figur 3 gezeigten Stellung in seine in Figur 4 gezeigte Stellung der Verschlussstopfen 15 in die Fassung 12 der Ausgabeöffnung 11 eingeführt wird. Der Verschlussstopfen 15 dichtet bei seinem Eingreifen in die Fassung 12 die Ausgabeöffnung 11 ab.

Figuren 3 und 4 zeigen, dass das Behältnis 9 des Behälters 7 oberseitig einen umlaufenden Kragen 16 aufweist. Der Kragen 16 ist ausgeführt, dass dieser an der thermischen Isolierung 6 des Milchaufbewahrungsbehälters 1 anliegt, wenn der Vorratsbehälter 7 darin eingesetzt ist.

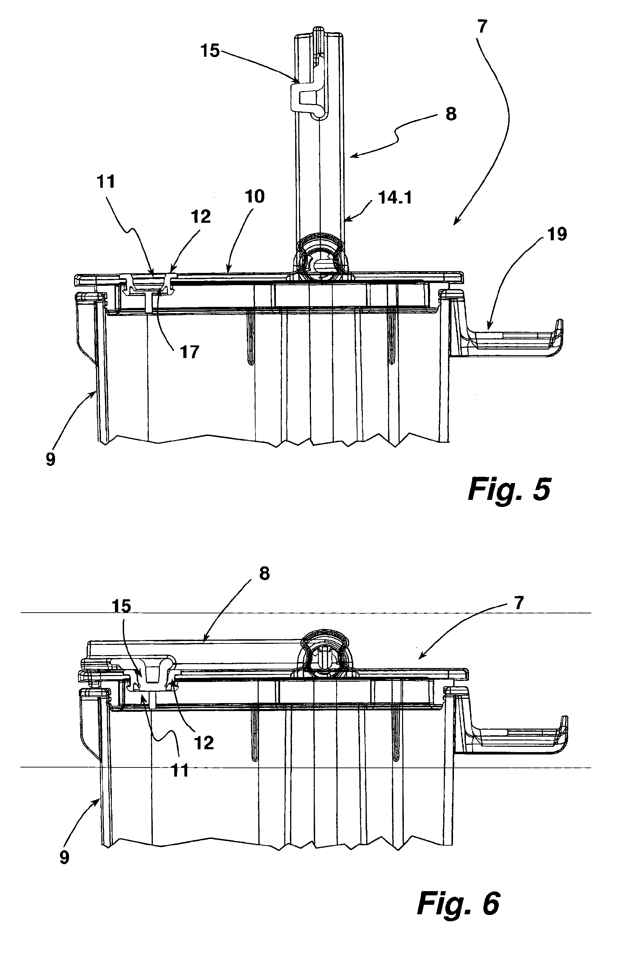

Der Querschnitt der Figur 5 verdeutlicht die Ausbildung des Deckels 10 bezüglich seines Eingriffes in das Behältnis 9. Erkennbar ist zudem die Ausgabeöffnung 11 mit seiner Fassung 12, die sich in der Schnittebene befindet. Die Fassung 12 verfügt über eine nach innen abragende Dichtlippe 17, die zum abgedichteten Verschließen der Ausgabeöffnung 11 an der Außenseite des Verschlussstopfens 15 zur Anlage gelangt, wie sich dieses aus Figur 6 ergibt, in der der Henkel 8 mit seinem Verschlussstopfen 15 in seiner die Ausgabeöffnung 11 verschließenden Stellung angeordnet ist.

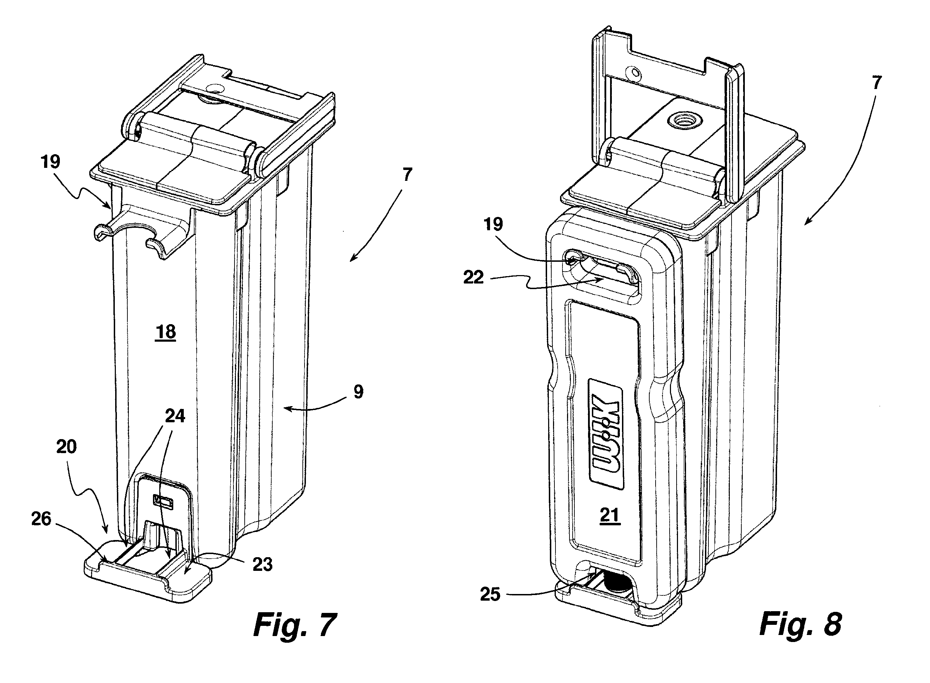

Figur 7 zeigt den Vorratsbehälter 7 in einer Rückansicht. Die in Figur 7 erkennbare Wand 18 des Behältnisses 9 trägt oberseitig ein erstes Verbindungsglied 19. Dieses ist ausgeführt nach Art eines Hakens. Das erste Verbindungsglied 19 befindet sich im Bereich des oberen Abschlusses des Behältnisses 9. Angeschlossen an den unteren Abschluss des Behältnisses 9 ist ein zweites Verbindungsglied 20. Die Verbindungsglieder 19, 20 dienen zum Anbringen und Halten eines passiven Kühlelementes, wie dieses mit dem Bezugszeichen 21 in Figur 8 gezeigt ist. Das Kühlelement 21 verfügt über eine obere Öffnung 22. Mit dieser wird das Kühlelement 20 auf das obere Verbindungsglied 19 aufgehängt. Das untere Verbindungsglied 20 dient zum unterseitigen Halten des Kühlelementes 21, welches zu diesem Zweck mit seiner Unterseite auf dem Boden 23 des zweiten Verbindungsgliedes 20 aufsteht. Bei dem dargestellten Ausführungsbeispiel ist das untere Verbindungsglied 20 ein eigenes Bauteil, welches durch Rastmittel an das Behältnis 9 angeschlossen ist. Der Boden 23 des zweiten Verbindungsgliedes 20 trägt zwei Positionierwülste 24, die zwischen eine unterseitige Ausnehmung 25 des Kühlelementes 21 eingreifen. Zusätzlich verfügt der Boden 23 des zweiten Verbindungsgliedes 20 über eine frontseitige Rippe 26, hinter der die Vorderseite des Kühlelementes 21 steht. Somit ist durch die Positionierwülste 24 und die Rippe 26 eine Aufnahme gebildet, um den unteren Abschluss des Kühlelementes 21 formschlüssig an dem Behältnis 9 bzw. dem Behälter 7 zu halten.

### Bezugszeichenliste

- 1: Milchaufbewahrungsbehälter
- 2: Gehäuse
- 3: Deckel
- 4: Seitenwand
- 5: Leitungsdurchbrechung
- 6: thermische Isolierung
- 7: Vorratsbehälter
- 8: Henkel
- 9: Behältnis
- 10: Deckel
- 11: Ausgabeöffnung
- 12: Fassung
- 13: Griffstück
- 14, 14.1: Schenkel
- 15: Verschlussstopfen
- 16: Kragen
- 17: Dichtlippe
- 18: Wand
- 19: erstes Verbindungsglied
- 20: zweites Verbindungsglied
- 21: Kühlelement
- 22: Öffnung
- 23: Boden
- 24: Positionierwulst
- 25: Ausnehmung
- 26: Rippe

## Patentansprüche

1. Vorratsbehälter mit passivem Kühlelement zum Aufbewahren eines flüssigen Nahrungsmittels, etwa von Milch im Zusammenhang mit der Zufuhr desselben an eine Zubereitungsmaschine, insbesondere eine Kaffeemaschine, wobei der Behälter (7) als herausnehmbarer Einsatz für ein thermisch isoliertes Aufbewahrungsbehältnis ausgeführt ist und der Behälter (7) zumindest ein Verbindungsglied (19, 20) zum Anbringen des passiven Kühlelements (21) trägt, **dadurch gekennzeichnet, dass** der Behälter (7) über zwei Verbindungsglieder (19, 20) zum Anbringen des passiven Kühlelementes (21) verfügt, von denen ein ein oberes Verbindungselement (19) ist, an dem das Kühlelement (21) mit einem Aufhänger (22) aufhängbar ist, und von denen das andere ein unteres Verbindungsglied (20) ist, auf das das Kühlelement (21), wenn mit seinem Aufhänger (22) an dem oberen Verbindungsglied (19) aufgehängt, mit seiner Unterseite aufsteht und/oder von diesem formschlüssig gehalten wird.

2. Behälter nach Anspruch 1, **dadurch gekennzeichnet, dass** das Kühlelement (21) zwischen den beiden Verbindungsgliedern (19, 20) des Behälters (7) verklemmt gehalten ist.

3. Behälter nach Anspruch 1 oder 2, **dadurch gekennzeichnet, dass** das untere Verbindungsglied (20) zumindest ein nach oben hin abragendes Positionierelement (24) aufweist, welches zum Zusammenwirken mit einem komplementären Element des Kühlelementes (21) zum formschlüssigen Halten des Kühlelementes (21) in zumindest einer Richtung an dem unteren Verbindungselement (20) ausgelegt ist.

4. Behälter nach Anspruch 3, **dadurch gekennzeichnet, dass** das Kühlelement (21) an seiner auf das untere Verbindungselement (20) zu positionierenden Seiten eine sich über seine Tiefe erstreckende Vertiefung aufweist und das untere Verbindungsglied (20) des Behälters (7) zwei an dem Rand der Vertiefung anliegende Querstege als Haltelemente trägt.

## Claims

1. Storage container with passive cooling element for storing a liquid foodstuff, such as milk, in connection with its supply to a preparation machine, in particular a coffee machine, wherein the container (7) is designed as a removable insert for a thermally insulated storage vessel, and the container (7) carries at least one connecting member (19, 20) for attaching the passive cooling element (21), **characterised in that** the container (7) has two connecting members (19, 20) for attaching the passive cooling element (21), one of which is an upper connecting member (19) on which the cooling element (21) can be suspended by a hanger (22), and the other of which is a lower connecting member (20) which supports and/or holds by form fit the underside of the cooling element (21) when it is suspended by its hanger (22) on the upper connecting member (19).

2. Container according to claim 1, **characterised in that** the cooling element (21) is held clamped between the two connecting members (19, 20) of the container (7).

3. Container according to claim 1 or 2, **characterised in that** the lower connecting member (20) has at least one upwardly protruding, positioning element (24) which is designed for cooperating with a complementary element of the cooling element (21) to hold the cooling element (21) on the lower connecting member (20) by form fit in at least one direction.

4. Container according to claim 3, **characterised in that** the cooling element (21) has a recess extending over its depth on the sides to be positioned on the lower connecting member (20), and the lower connecting member (20) of the container (7) has two cross members lying on the edge of the recess as retaining elements.

## Revendications

1. Réservoir de stockage avec un élément de refroidissement passif pour le rangement d'un produit alimentaire liquide, par exemple de lait, associé à l'acheminement de ce dernier vers une machine de préparation, notamment une machine à café, le réservoir (7) étant conçu en tant qu'insert amovible pour un récipient de rangement à isolation thermique et le réservoir (7) comportant au moins un élément de liaison (19, 20) destiné à fixer un élément de refroidissement (21) passif, **caractérisé en ce que** le récipient (7) dispose de deux éléments de liaison (19, 20) destinés à fixer un élément de refroidissement (21) passif, dont l'un est un élément de liaison supérieur (19) sur lequel peut être suspendu un élément de refroidissement (21) avec une suspension (22) et dont l'autre est un élément de liaison inférieur (20), sur lequel l'élément de refroidissement (21), lorsqu'il est suspendu par sa suspension (22) sur l'élément de liaison supérieur (19), est en appui par sa face inférieure et/ou est maintenu par lui par complémentarité de forme.

2. Réservoir selon la revendication 1, **caractérisé en ce que** l'élément de refroidissement (21) est maintenu serré entre les deux éléments de liaison (19, 20) du réservoir (7).

3. Réservoir selon la revendication 1 ou 2, **caractérisé en ce que** l'élément de liaison inférieur (20) présente au moins un élément de positionnement (24) en saillie vers le haut, lequel est conçu pour agir conjointement avec un élément complémentaire de l'élément de refroidissement (21) afin de maintenir par complémentarité de forme l'élément de refroidissement (21) dans au moins une direction sur l'élément de liaison inférieur (20).

4. Réservoir selon la revendication 3, **caractérisé en ce que** l'élément de refroidissement (21) présente, sur sa face à positionner sur l'élément de liaison inférieur (20), un renfoncement s'étendant sur sa profondeur et l'élément de liaison inférieur (20) du réservoir (7) supporte, deux traverses, en contact avec le bord du renfoncement, faisant office d'éléments de maintien .
